# EUROPÄISCHE PATENTSCHRIFT

(11) **EP 3 667 049 B1**
(45) Veröffentlichungstag und Bekanntmachung des Hinweises auf die Patenterteilung: **21.01.2026**
(21) Anmeldenummer: 19210960.1
(22) Anmeldetag: 22.11.2019
(51) Int. Cl.: F01N 9/00, F02D 41/02, F01N 3/20, F02D 41/22, F02D 41/26, F02D 41/28, F01N 11/00, G07C 5/08, F02D 41/14, F02M 26/49

(54) **VERFAHREN ZUM ERKENNEN EINES MANIPULIERTEN BETRIEBS EINER KOMPONENTE EINES FAHRZEUGS**
METHOD FOR IDENTIFYING A MANIPULATED OPERATION OF A COMPONENT OF A VEHICLE
PROCÉDÉ DE DÉTECTION D'UN FONCTIONNEMENT MANIPULÉ DE COMPOSANT D'UN VÉHICULE

(30) Priorität: 11.12.2018 DE 102018221441
(43) Veröffentlichungstag der Anmeldung: 17.06.2020
(73) Patentinhaber: Robert Bosch GmbH, 70442 Stuttgart (DE)
(72) Erfinder: Willimowski, Markus, 71691 Freiberg A.N. (DE); Ghanbari Milani, Farzaneh, 70825 Korntal-Muenchingen (DE); Shokrollahi, Jamshid, 71642 Ludwigsburg (DE)

(56) Entgegenhaltungen:
- EP-A1- 2 778 361
- EP-A1- 3 006 686
- DE-A1- 102011 103 699
- DE-A1- 102014 209 551
- US-A1- 2013 024 066
- US-A1- 2018 298 834
- US-B1- 10 060 323

## Beschreibung

Die vorliegende Erfindung betrifft ein Verfahren zum Erkennen eines manipulierten Betriebs einer Komponente eines Fahrzeuges sowie eine Recheneinheit und ein Computerprogramm zu dessen Durchführung.

### Stand der Technik

Anstrengungen zur Manipulation von Fahrzeugkomponenten sind bekannt. Dabei werden beispielsweise Daten eines Programmcodes oder Sensor- oder Sollwerte verändert, um Leistungssteigerungen herbeizuführen. Dies kann zu Bauteilschäden und Umweltverschmutzung führen, sogar zu Personenschäden, da die gesamte Fahrzeugauslegung (Antrieb, Bremsanlage) beeinträchtigt werden kann.

Auch Manipulationen im Abgasstrang greifen um sich. Die sog. selektive katalytische Reduktion (englisch selective catalytic reduction, SCR) bezeichnet eine Technik zur Reduktion von Stickoxiden im Abgas von Brennkraftmaschinen von Fahrzeugen, wobei Stickoxide NO, NO₂ reduziert werden, während unerwünschte Nebenreaktionen wie die Oxidation von Schwefeldioxid zu Schwefeltrioxid weitgehend unterdrückt werden. Für die Reaktion wird Ammoniak NH₃ benötigt, das dem Abgas zugemischt wird. Die Produkte der Reaktion sind Wasser und Stickstoff N₂. Zu diesem Zweck wird eine Harnstofflösung verwendet, die vor einem entsprechenden SCR-Injektor in den Abgasstrom eingesprüht wird. Durch eine Hydrolysereaktion entstehen aus der Harnstofflösung der benötigte Ammoniak sowie CO₂. Die Menge des eingespritzten Harnstoffs ist von der motorischen Stickoxidemission und damit von der momentanen Drehzahl und dem Drehmoment des Motors abhängig.

Um den Verbrauch derartiger Harnstofflösungen einzusparen, versucht ein Angreifer das Harnstoffdosiersystem derart zu manipulieren, dass kein Harnstoff mehr in das Abgas eingespritzt wird. Um zu verhindern, dass ein Steuergerät diese Manipulation bemerkt, werden sog. "Harnstoffmanipulatoren" eingesetzt werden, welche Sensorsignale eines korrekt arbeitenden Dosiersystems und SCR-Katalysators simulieren und an das Steuergerät übermitteln.

Derartige Manipulationen können zu einer erheblichen Belastung der Umwelt führen, so dass es von Bedeutung ist, eine Manipulation von Komponenten eines Fahrzeugs erkennen zu können.

Die DE 10 2011 103 699 A1 offenbart eine Bewertung von Systemfehlern einer Diagnoseeinheit in Bezug auf mögliche Manipulationen z.B. in einem SCR-Katalysator-System, indem beispielsweise die Häufigkeit eines Fehlers über mehrere Fahrzyklen hinweg geprüft wird. Die US 10 060 323 B1 offenbart ein Diagnoseverfahren für eine Dieselabgaspumpe und vergleicht einen berechneten Druckabfall auf Basis eines mittleren Anfangs- und Enddrucks nach Einspritzen von Diesel mit einem erwarteten Druckabfall auf Basis eines üblichen Betriebszyklus der Pumpe. In EP 2 778 361 A1 wird eine Blockierung im Zuführungssystem für Reduktionsmittel geprüft, indem unterschiedliche Druckdifferenzen bei verschiedenen Betriebsbedingungen gemessen und ausgewertet werden. Die US 2013/024 066 A1 beschreibt ein Verfahren zur Erkennung von Manipulationen von Motorsteuergeräten, wobei Testsignale bzw. Testsequenzen mit bestimmten Eigenschaften eingebracht werden und die Signalantworten ausgewertet werden. In der DE102014209551A1 wird ein Verfahren zum Verarbeiten von sensorisch erfassten Werten eines Kraftfahrzeugs dargestellt, das eine Abgasanlage aufweist, mit der eine selektive katalytische Reduktion durchgeführt wird.

### Offenbarung der Erfindung

Erfindungsgemäß werden ein Verfahren zum Erkennen eines manipulierten Betriebs einer Komponente eines Fahrzeugs sowie eine Recheneinheit und ein

Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Im Zuge des Verfahrens werden in einer fahrzeugfremden Recheneinheit von dem Fahrzeug stammende komponentenspezifische Daten empfangen. In der fahrzeugfremden Recheneinheit wird dann eine Plausibilitätsüberprüfung der empfangenen komponentenspezifischen Daten unter Verwendung von in der fahrzeugfremden Recheneinheit vorhandenen Daten durchgeführt, wobei aus den in der fahrzeugfremden Recheneinheit vorhandenen Daten ein Plausibilitätskriterium abgeleitet wird. Basierend auf einem Ergebnis der Plausibilitätsüberprüfung wird bewertet bzw. überprüft, ob ein manipulierter Betrieb der Komponente des Fahrzeugs vorliegt. Es versteht sich, dass die in der fahrzeugfremden Recheneinheit vorhandenen Daten und die empfangenen komponentenspezifischen Daten nicht dieselben Daten, sondern unterschiedliche Daten sind.

Als eine fahrzeugfremde Recheneinheit ist eine Recheneinheit zu verstehen, welche sich nicht in dem Fahrzeug befindet und mit welcher das Fahrzeug bzw. ein Steuergerät des Fahrzeugs über eine Funkverbindung kommunizieren kann, z.B. über ein Mobilfunknetz (z.B. 3G, 4G usw.), WLAN oder Bluetooth usw. Zweckmäßigerweise kann die fahrzeugfremde Recheneinheit Teil eines Systems von verteilten Recheneinheiten sein.

Als komponentenspezifische Daten seien in diesem Zusammenhang insbesondere Daten zu verstehen, welche die Komponente bzw. den Betrieb der Komponente charakterisieren und in dem Fahrzeug selbst vorliegen, insbesondere in Steuergeräten des Fahrzeugs. Hierbei handelt es insbesondere um aktuelle Daten, welche während des aktuellen Betriebs des Fahrzeugs bzw. der Komponente in dem Fahrzeug selbst erfasst bzw. bestimmt werden. Insbesondere können die komponentenspezifischen Daten Sensorwerte umfassen, welche mit Hilfe von Sensoren für den Betrieb der Komponente erfasst werden. Alternativ oder zusätzlich können die komponentenspezifischen Daten Aktorwerte zum Ansteuern von Aktoren umfassen, die zum Betrieb der Komponente benötigt werden. Beispielsweise kann es sich bei den komponentenspezifischen Daten um Temperaturwerte, Abgaswerte oder Druckwerte (z.B. ein zu erwartender Druckabfall, wenn ein Ventil des Harnstoffdosierungssystems geöffnet wird) handeln.

Als den in der fahrzeugfremden Recheneinheit vorhandene Daten seien hingegeben in diesem Zusammenhang insbesondere Daten zu verstehen, welche während des aktuellen Betriebs des Fahrzeugs bzw. der Komponente nicht in dem Fahrzeug vorliegen. Die fahrzeugfremde Recheneinheit kann diese Daten beispielsweise aus anderen Quellen beziehen. Insbesondere handelt es sich bei den in der fahrzeugfremden Recheneinheit vorhandenen Daten um Referenz- bzw. Vergleichsdaten, welche die Komponente bzw. einen fehlerfreien Betrieb der Komponente charakterisieren, jedoch nicht in dem aktuellen Betrieb der Komponente erfassbar sind und nicht in dem Fahrzeug selbst hinterlegt sind. Durch das Ableiten eines Plausibilitätskriteriums aus den in der fahrzeugfremden Recheneinheit vorhandenen Daten kann zweckmäßigerweise rückgeschlossen werden, ob die empfangenen komponentenspezifischen Daten plausibel sind und von einer nicht manipulierten oder von einer manipulierten Komponente stammen.

Die Komponente des Fahrzeugs kann beispielsweise ein Partikelfilter, ein Abgasrückführsystem, ein Abgasnachbehandlungssystem oder ein Dosiersystem sein. So können im Falle eines Abgasrückführsystems oder eines Abgasnachbehandlungssystems die komponentenspezifischen Daten beispielsweise abgassystemspezifische Daten sein, welche insbesondere das Abgas beschreiben, etwa dessen Zusammensetzung und/oder dessen Temperatur.

Im Rahmen des vorliegenden Verfahrens kann mit Hilfe der empfangenen komponentenspezifischen Daten und der in der fahrzeugfremden Recheneinheit vorhandenen Daten überprüft werden, ob eine Manipulation vorliegt. Im Zuge der Plausibilitätsüberprüfung wird insbesondere überprüft, ob es plausibel bzw. ob es möglich, wahrscheinlich oder realistisch ist, dass die komponentenspezifischen Daten tatsächlich während des aktuellen Betriebs der Komponente bestimmt wurden oder ob es sich um manipulierte Daten handelt bzw. um Daten, die aufgrund einer manipulierten Komponente entstanden sind. Insbesondere werden hierzu die in der fahrzeugfremden Recheneinheit vorhandenen Daten als Vergleichs- bzw. Referenzwerte herangezogen, welche zweckmäßigerweise einen fehlerfreien Betrieb der Komponente charakterisieren bzw. Daten, die während eines fehlerfreien Betriebs bestimmt werden können. In diesem Sinne umfasst also das Plausibiltätskriterium eine nicht zu große, z.B. nicht über einem Schwellwert liegende Abweichung zwischen den Daten.

Wenn im Zuge der Plausibilitätsüberprüfung bestimmt wird, dass die komponentenspezifischen Daten plausibel sind, wird insbesondere bewertet, dass kein manipulierter Betrieb der Komponente vorliegt. Wird hingegen im Zuge der Plausibilitätsüberprüfung bestimmt, dass die komponentenspezifischen Daten nicht plausibel sind, wird insbesondere bewertet, dass ein manipulierter Betrieb vorliegt oder zumindest vorliegen könnte.

Ein Angreifer kann sich zur Manipulation zwar gegebenenfalls uneingeschränkten direkten physischen Zugriff auf das Fahrzeug, dessen Steuergeräte und die darauf gespeicherten Daten verschaffen. Auf eine fahrzeugfremde Recheneinheit (wie eine Cloud), mit welcher das Fahrzeug bzw. dessen Steuergeräte über eine Funkverbindung kommuniziert, kann sich ein Angreifer hingegen nicht ohne weiteres Zugriff verschaffen. Allenfalls kann ein Angreifer die Daten manipulieren, welche von dem Fahrzeug an die fahrzeugfremde Recheneinheit übermittelt werden. Sobald derartige Daten jedoch an die fahrzeugfremde Recheneinheit übermittelt wurden, kann sich ein Angreifer darauf normalerweise keinen Zugriff mehr verschaffen. Somit hat ein Angreifer zweckmäßigerweise auch keine Zugriffsmöglichkeit auf die in der fahrzeugfremden Recheneinheit vorhandenen Daten. Die Erfindung schlägt daher vor, die Überprüfung auf Manipulation der Komponente in eine fahrzeugfremde Recheneinheit auszulagern und in dieser anhand von dort vorhandenen Daten durchzuführen, da sich ein Angreifer auf diese keinen Zugriff verschaffen kann und eine dort durchgeführte Überprüfung auf Manipulation nicht beeinflussen kann.

Durch das Verfahren kann auf zuverlässige Weise überprüft werden, ob eine Manipulation vorliegt oder nicht, insbesondere ohne dass ein Angreifer Einfluss auf die Überprüfung nehmen kann. Insbesondere kann die Plausibilitätsüberprüfung kontinuierlich durchgeführt werden oder in regelmäßigen zeitlichen Abständen. Zu diesem Zweck übermittelt das Fahrzeug zweckmäßigerweise kontinuierlich bzw. in regelmäßigen zeitlichen Abständen die entsprechenden komponentenspezifischen Daten an die fahrzeugfremde Recheneinheit.

Durch Auslagerung der Manipulationsüberwachung in eine fahrzeugfremde Recheneinheit kann ferner beispielsweise beim Verdacht einer Manipulation eine konkretere Überprüfung bzw. Verifikation der Manipulation durch Experten bzw. Fachleute vorgenommen werden, unabhängig von der aktuellen Position. Ferner kann beispielsweise verhindert werden, dass durch Löschen eines Fehlerspeichers des Fahrzeugs eine Manipulation unerkannt bleibt. So kann es beispielsweise durch Manipulation beim Starten des Fahrzeugs oder des Motors ein Fehlerspeicher in einem Steuergerät gelöscht werden. Oftmals wird ein Fehler erst dann bestätigt, wenn ein Fehlerzähler einen vorgegebenen Schwellwert erreicht und wenn ein gewisser Fehler somit beispielsweise während mehrerer verschiedener Fahrten auftritt. Durch Löschen des entsprechenden Fehlerspeichers wird der Fehlerzähler jedoch vor jedem Fahrtantritt zurückgesetzt. Der Fehlerzähler kann somit den Schwellwert nicht erreichen und die Manipulation bleibt unerkannt. Da es sich bei der fahrzeugfremden Recheneinheit und den dort vorhandenen Daten um von dem Fahrzeug unabhängige Daten handelt, kann auch eine derartige Fehlerspeichermanipulation erkannt werden. Insbesondere kann die fahrzeugfremden Recheneinheit über die aktuelle Position des Fahrzeugs verfügen, z.B. via GPS. Wenn ein Löschen von Fehlerspeichern oftmals an auffälligen Orten, insbesondere außerhalb von Werkstätten auftritt, kann eine Manipulation des Fahrzeugs erkannt werden. In diesem Sinne umfasst das Plausibiltätskriterium, ob ein Löschen des Fehlerspeichers an einem dafür zulässigen Ort stattfindet, insbesondere in einer Werkstatt.

Die in der fahrzeugfremden Recheneinheit vorhandenen Daten stammen von wenigstens einem weiteren Fahrzeug. Insbesondere können diese weiteren Fahrzeuge in der Nähe des Fahrzeugs betrieben werden und beispielsweise dieselbe Straße wie das Fahrzeug befahren. Ferner kann es sich bei dem Fahrzeug und den weiteren Fahrzeugen insbesondere um denselben Fahrzeugtyp handeln oder zumindest um Fahrzeuge, welche gleiche bzw. ähnliche Komponenten verwenden.

Erfindungsgemäß stammen die in der fahrzeugfremden Recheneinheit vorhandenen Daten von wenigstens einer eine Umgebung des Fahrzeugs betreffenden Quelle. Bei diesen Quellen handelt es sich insbesondere um fest installierte Messeinrichtungen, welche die Umgebung vermessen, durch welche sich das Fahrzeug gerade bewegt. Beispielsweise kann eine derartige Quelle eine Umweltmesseinrichtung sein, welche beispielsweise Geräuschpegel, Luftverschmutzung oder ähnliches in der Umgebung des Fahrzeugs erfasst. Beispielsweise können die in der fahrzeugfremden Recheneinheit vorhandenen Daten in diesem Fall einen Stickoxidwert in der Umgebung des Fahrzeugs betreffen und mit internen Stickoxidwerten des Fahrzeugs als komponentenspezifische Daten verglichen werden. In diesem Sinne umfasst also das Plausibiltätskriterium eine nicht zu große, z.B. nicht über einem Schwellwert liegende Abweichung zwischen den Daten.

Eine derartige Quelle kann beispielsweise auch eine Infrastrukturüberwachungseinrichtung sein, beispielsweise eine Mautüberwachungseinrichtung. Beispielsweise können die in der fahrzeugfremden Recheneinheit vorhandenen Daten in diesem Fall für ein theoretisches Modell des Fahrzeugs verwendet werden, um den aktuellen Betrieb des Fahrzeugs möglichst realitätsnah simulieren zu können. Insbesondere charakterisieren die Daten in diesem Fall die Umgebung, in welcher sich das Fahrzeug aktuell bewegt, beispielsweise die Straße, welche das Fahrzeug aktuell befährt. Ferner können die Daten in diesem Fall auch weitere Verkehrsteilnehmer betreffen, welche sich aktuell in der Nähe des Fahrzeugs befinden.

Die in der fahrzeugfremden Recheneinheit vorhandenen Daten können in einem nicht beanspruchten Beispiel auch in der fahrzeugfremden Recheneinheit gesammelte historische Daten des Fahrzeugs selbst sein. Insbesondere sind die Daten dabei in der Vergangenheit aus dem Fahrzeug empfangene Daten, welche in der fahrzeugfremden Recheneinheit archiviert werden und in dem Fahrzeug selbst nicht mehr hinterlegt sind. Vorzugsweise kann das Plausibiltätskriterium eine nicht zu große, z.B. nicht über einem Schwellwert liegende Abweichung der komponentenspezifischen Daten von einem aus den historischen Daten abgeleiteten Trend umfassen.

Insbesondere können Daten des Fahrzeugs manipulationssicher in der fahrzeugfremden Recheneinheit gespeichert werden. Die Daten können beispielsweise mit Zeitstempeln versehen werden, um eine Historie bzw. Entwicklung der Daten nachvollziehen zu können.

Bevorzugt sind die in der fahrzeugfremden Recheneinheit vorhandenen Daten von wenigstens einem weiteren Fahrzeug stammende komponentenspezifische Daten. Insbesondere sind die von dem Fahrzeug stammenden komponentenspezifischen Daten sowie die in der fahrzeugfremden Recheneinheit vorhandenen Daten von derselben Art. Beispielsweise können die komponentenspezifischen Daten und die in der fahrzeugfremden Recheneinheit vorhandenen Daten Messwerte von einem gleichen bzw. baugleichen Sensor sein, beispielsweise von einem NOx-Sensor. Die fahrzeugfremden Daten stellen dabei repräsentative Referenzdaten bzw. Vergleichswerte dar, da davon ausgegangen werden kann, dass die weiteren Fahrzeuge zumindest zum größten Teil nicht manipuliert sind und insbesondere ähnlich wie das zu überprüfende Fahrzeug betrieben werden. Sofern das Fahrzeug nicht manipuliert ist, sollten die komponentenspezifischen Daten des Fahrzeugs dabei mit den in der fahrzeugfremden Recheneinheit vorhandenen Daten der weiteren Fahrzeuge zumindest im Wesentlichen übereinstimmen. In diesem Sinne umfasst also das Plausibiltätskriterium eine nicht zu große, z.B. nicht über einem Schwellwert liegende Abweichung zwischen den Daten.

Gemäß einer besonders bevorzugten Ausführungsform umfassen die komponentenspezifischen Daten eine bestimmte komponentenspezifische Kenngröße, die in Abhängigkeit von Sensorwerten des Fahrzeugs bestimmt wird. Zweckmäßigerweise kann die fahrzeugfremde Recheneinheit das Fahrzeug anweisen, diese Kenngröße zu bestimmen und zu übermitteln. Oftmals kann es vorkommen, dass Angreifer bestehende Möglichkeiten zum Erkennen von Manipulationen überwinden, so dass Manipulation mit herkömmlichen Methoden nicht mehr erkannt werden können. Fahrzeughersteller können daher stets nach neuen Möglichkeiten suchen, um Manipulationen effektiv erkennen zu können. Insbesondere können dabei neue Kenngrößen entwickelt werden, mittels welcher sich Manipulationen erkennen lassen. Beispielsweise können derartige Kenngrößen Sensorwerte sein, welche auf spezielle Art miteinander korreliert und in Verbindung gebracht werden. Wenn eine neue derartige Kenngröße entwickelt wurde, kann die fahrzeugfremde Recheneinheit dies an das Fahrzeug mitteilen, welches daraufhin diese neue Kenngröße bestimmt und an die fahrzeugfremde Recheneinheit übermittelt.

Vorzugsweise wird die komponentenspezifische Kenngröße in Abhängigkeit von Abgassensorwerten des Fahrzeugs bestimmt. Als Abgassensorwerte seien in diesem Zusammenhang insbesondere Messwerte von einem oder mehreren Sensoren in einem Abgasstrom des Fahrzeugs zu verstehen. Beispielsweise können diese Abgassensorwerte einen Anteil von Stickoxiden im Abgas betreffen oder auch eine Temperatur des Abgases. Eine von derartigen Abgassensorwerten bestimmte Kenngröße stellt eine besonders effektive Möglichkeit dar, um zweckmäßigerweise Komponenten wie ein Abgasrückführsystem oder Abgasnachbehandlungssystem auf Manipulation zu überprüfen. Besonders bevorzugt eignet sich eine derartige von Abgassensorwerten abhängige Kenngröße für ein Harnstoffdosiersystem zum ordnungsgemäßen Betreiben eines Katalysators zur selektiven katalytischen Reduktion.

Vorzugsweise wird die komponentenspezifische Kenngröße in Abhängigkeit von Mittelwerten einer Vielzahl von Sensorwerten bestimmt. Diese Vielzahl von Sensorwerten kann beispielsweise innerhalb eines bestimmten Zeitintervalls im Fahrzeug erfasst werden. Bei der Kenngröße handelt es sich somit zweckmäßigerweise um einen statistischen Wert, wodurch insbesondere Schwankungen und Unregelmäßigkeiten in Sensorwerten ausgeglichen werden können, so dass nicht aufgrund kurzzeitiger statistischer Schwankungen der Sensorwerte fälschlicherweise eine Manipulation detektiert wird, obwohl keine vorliegt.

Bevorzugt wird die komponentenspezifische Kenngröße in Abhängigkeit von aktuellen Werten einer Brennkraftmaschine des Fahrzeugs bestimmt. Somit können die Sensorwerte insbesondere mit dem aktuellen Betrieb der Brennkraftmaschine in Bezug gebracht werden, wodurch eine Bewertung der Plausibilität der Sensorwerte verbessert und präzisiert werden kann. Aktuelle Werte der Brennkraftmaschine sind insbesondere aktuelle Werte für Geschwindigkeit, Drehzahl, Leistung, Drehmoment, usw.

Gemäß einer besonders bevorzugten Ausgestaltung umfasst die komponentenspezifische Kenngröße Mittelwerte einer Vielzahl von Sensorwerten in Abhängigkeit von aktuellen Werten der Brennkraftmaschine, besonders bevorzugt in Abhängigkeit von der aktuellen Drehzahl und/oder dem aktuellen Drehmoment. Diese Mittelwerte werden insbesondere als Funktion in Abhängigkeit von den aktuellen Werten der Brennkraftmaschine bestimmt, bevorzugt in Form der aktuellen Drehzahl und dem aktuellen Drehmoment. Beispielsweise kann die komponentenspezifische Kenngröße dabei in Form von Tabellen oder auch als Funktionen bzw. Funktionsgraphen sein. Eine derartige komponentenspezifische Kenngröße stellt eine besonders effektive Möglichkeit dar, um eine Manipulation der Komponente zu erkennen.

Besonders bevorzugt umfasst die komponentenspezifische Kenngröße Mittelwerte einer Vielzahl von Abgassensorwerten in Abhängigkeit von aktuellen Werten der Brennkraftmaschine. Diese Vielzahl von Abgassensorwerten umfasst insbesondere Messwerte von Abgassensoren, die in einem Abgasstrom sowohl stromaufwärts als auch stromabwärts eines Injektors zum Einspritzen einer Harnstofflösung angeordnet sind. Eine derartige komponentenspezifische Kenngröße eignet sich besonders vorteilhaft zur Manipulationsüberwachung eines Harnstoffdosiersystems eines Katalysators zur selektiven katalytischen Reduktion.

Es wird, wenn basierend auf dem Ergebnis der Plausibilitätsüberprüfung bewertet wird, dass eine Manipulation der Komponente vorliegt, eine vorgegebene Maßnahme durchgeführt. Insbesondere kann mit dieser Maßnahme verifiziert werden, ob tatsächlich eine Manipulation der Komponente vorliegt. Es wird als derartige Maßnahme wenigstens eine weitere Überprüfung durchgeführt, ob eine Manipulation vorliegt. Die Endbewertung kann sich insbesondere aus den Einzelergebnissen zusammensetzen. Liegt diese beispielsweise über einer Schwelle, kann auf Manipulation erkannt werden.

Insbesondere ist es auch denkbar, dass als Maßnahme zunächst ein Zähler erhöht wird und dass eine weitere Überprüfung durchgeführt wird, wenn dieser Zähler einen vorgegebenen Schwellwert erreicht. Eine derartige weitere Überprüfung kann insbesondere ein aktiver Test sein, im Zuge dessen aktiv danach gesucht wird, ob eine Manipulation der Komponente vorliegt. Diese weitere Überprüfung kann beispielsweise ebenfalls in der fahrzeugfremden Recheneinheit oder insbesondere auch direkt in dem Fahrzeug von einem Steuergerät durchgeführt werden. Da Signale im Zuge eines derartigen aktiven Tests von einen Angreifer kaum manipuliert werden können, sind derartige Tests eine effektive Methode, um zu verifizieren, ob tatsächlich eine Manipulation der Komponente vorliegt.

Erfindungsgemäß ist die Komponente ein Katalysator zur selektiven katalytischen Reduktion (englisch selective catalytic reduction, SCR) oder ein Dosiersystem bzw. Harnstoffdosiersystem für einen derartigen Katalysator. Wie eingangs erläutert, wird im Zuge des Betriebs eines derartigen Katalysators eine Harnstofflösung in den Abgasstrom eingesprüht. Durch eine Hydrolysereaktion entstehen aus der Harnstofflösung Ammoniak sowie CO₂. Dieser Ammoniak reagiert mit Stickoxiden NO, NO₂ im Abgasstrom und reduziert diese. Die Menge des eingespritzten Harnstoffs ist von der motorischen Stickoxidemission und damit von der momentanen Drehzahl und dem Drehmoment des Motors abhängig. Als manipulierter Betrieb eines derartigen Katalysators bzw. eines entsprechenden Dosiersystems sei in diesem Zusammenhang insbesondere zu verstehen, dass das Dosiersystem derart manipuliert wird, dass kein oder zumindest kaum Harnstoff mehr in das Abgas eingespritzt wird, beispielsweise indem das Dosiersystem komplett deaktiviert wird. Ferner werden im Zuge einer derartigen Manipulation Sensorwerte eines korrekt funktionierenden Dosier- bzw. SCR-Systems simuliert und an ein Steuergerät des Fahrzeugs übermittelt, um zu verhindern, dass die Manipulation erkannt wird. Das Verfahren eignet sich in besonders vorteilhafter Weise zum Erkennen eines manipulierten Betriebs eines derartigen Katalysators zur selektiven katalytischen Reduktion bzw. eines entsprechenden Harnstoffdosiersystems zum ordnungsgemäßen Betreiben eines derartigen Katalysators.

Eine erfindungsgemäße Recheneinheit ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch ein System aus einem Fahrzeug und einer fahrzeugfremden Recheneinheit, die dazu eingerichtet ist, eine bevorzugte Ausführungsform eines erfindungsgemäßen Verfahrens durchzuführen, um eine Manipulation des Fahrzeugs zu erkennen.
- Figur 2: zeigt schematisch eine bevorzugte Ausführungsform eines erfindungsgemäßen Verfahrens als ein Blockdiagramm.
- Figur 3: zeigt schematisch ein System aus einem Fahrzeug und einer fahrzeugfremden Recheneinheit, die dazu eingerichtet ist, eine bevorzugte Ausführungsform eines erfindungsgemäßen Verfahrens durchzuführen.

### Ausführungsform(en) der Erfindung

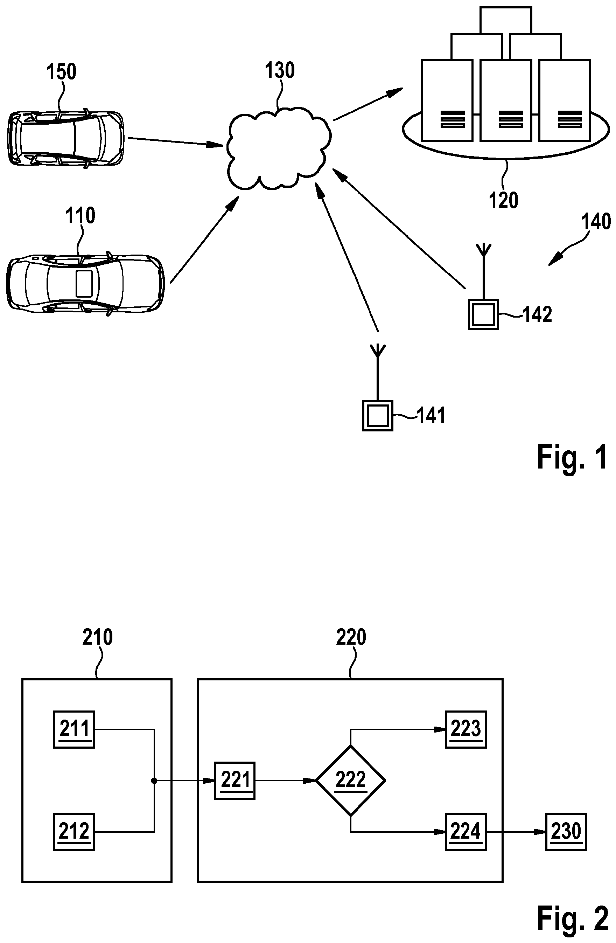

Figur 1 zeigt schematisch ein Fahrzeug 110, welches daraufhin untersucht werden soll, ob eine Manipulation einer Komponente des Fahrzeugs 110 vorliegt, beispielsweise eines Harnstoffdosiersystems für einen Katalysator zur selektiven katalytischen Reduktion. Zu diesem Zweck übermittelt das Fahrzeug 110 während seines Betriebs komponentenspezifische bzw. katalysatorspezifische Daten über eine Funkverbindung 130, beispielsweise über ein Mobilfunknetz wie 3G, 4G usw. und ggf. das Internet, an eine fahrzeugfremde Recheneinheit 120 bzw. an ein fahrzeugfremdes Recheneinheitensystem 120 (insbesondere an eine sog. Cloud).

Über die Funkverbindung 130 kann die fahrzeugfremde Recheneinheit 120 ferner weitere Daten empfangen, insbesondere von weiteren Fahrzeugen 150, die sich beispielsweise in der Umgebung des Fahrzeugs 110 befinden oder beispielsweise denselben Typ von Katalysator verwenden wie das zu untersuchende Fahrzeug 110. Obgleich in Figur 1 der Übersichtlichkeit halber nur ein weiteres Fahrzeug 150 dargestellt ist, versteht sich, dass die fahrzeugfremde Recheneinheit 120 Daten von einer Vielzahl weiterer Fahrzeuge 150 empfangen kann.

Ferner kann die fahrzeugfremde Recheneinheit 120 weitere Daten von in der Umgebung des Fahrzeugs 110 fest installierten Quellen 140 empfangen, z.B. von einer Umweltmesseinrichtung 141, beispielsweise zum Ermitteln von Luftverschmutzung in der Umgebung des Fahrzeugs 110, oder von einer Infrastrukturüberwachungseinrichtung 142, beispielsweise in Form einer Mautüberwachungseinrichtung.

Auch an dieser Stelle soll angemerkt sein, dass in Figur 1 der Übersichtlichkeit halber nur zwei derartige Quellen 140 dargestellt sind, dass die fahrzeugfremde Recheneinheit 120 aber Daten von einer Vielzahl derartiger Quellen 140 empfangen kann.

Um zu erkennen, ob eine Manipulation des Katalysators bzw. des Dosiersystems des Fahrzeugs 110 vorliegt, ist die fahrzeugfremde Recheneinheit 120, insbesondere programmtechnisch, dazu eingerichtet, eine bevorzugte Ausführungsform eines erfindungsgemäßen Verfahrens durchzuführen, wie in Figur 2 schematisch als ein Blockdiagramm dargestellt ist und nachfolgend in Bezug auf die Figuren 1 und 2 erläutert wird.

In Block 210 empfängt die fahrzeugfremde Recheneinheit 120 Daten sowohl das Fahrzeug 110 als auch dessen Umgebung betreffend.

In Schritt 211 empfängt die fahrzeugfremde Recheneinheit 120 komponentenspezifische bzw. katalysatorspezifische Daten von dem Fahrzeug 110, insbesondere eine spezielle Kenngröße für die SCR-System-Überprüfung. Diese Kenngröße ist insbesondere ein Mittelwert von Abgassensorwerten in Abhängigkeit von aktuellen Werten der Brennkraftmaschine des Fahrzeugs 110. Diese Abgassensorwerte sind beispielsweise Messwerte von Abgassensoren, z.B. NOx-Sensoren, die in einem Abgasstrom sowohl stromaufwärts als auch stromabwärts eines Injektors zum Einspritzen der Harnstofflösung angeordnet sind. Die Mittelwerte dieser Abgassensorwerte werden insbesondere als Funktion in Abhängigkeit von den aktuellen Werten der Brennkraftmaschine in Form der aktuellen Drehzahl und des aktuellen Drehmoments über eine vorgegebene Zeit bestimmt und abgespeichert.

In Schritt 212 empfängt die fahrzeugfremde Recheneinheit 120 ferner weitere Daten von weiteren Fahrzeugen 150. Als weitere Daten wird dabei von den weiteren Fahrzeugen 150 jeweils eine entsprechende Kenngröße als Mittelwert der jeweiligen Abgassensorwerte in Abhängigkeit von den jeweiligen aktuellen Werten der Brennkraftmaschine empfangen.

In Block 220 wird in der fahrzeugfremden Recheneinheit 120 eine Plausibilitätsüberprüfung der empfangenen Daten durchgeführt, wobei ein Plausibilitätskriterium aus den in der fahrzeugfremden Recheneinheit 120 vorhandenen Daten abgeleitet wird.

In Schritt 221 können die in Schritt 212 empfangenen weiteren Daten dabei beispielsweise zunächst statistisch ausgewertet werden, z.B. um einen Erwartungswert für die Kenngröße bei einem nicht manipulierten Fahrzeug zu bestimmen. Vorzugsweise werden die über den stromabwärtigen Abgassensor ermittelten Mittelwerte aus dem laufenden Fahrzeugbetrieb in den jeweils charakteristischen Betriebspunkten (Drehzahl, Drehmoment) mit den für das Fahrzeug typisch erwarteten Werten in diesen jeweiligen Betriebspunkten verglichen, um daraus Abweichung als Residuum im jeweiligen Betriebspunkt zu bilden. Die so erhaltenen betriebspunktabhängigen Residuen werden auf den jeweiligen betriebspunktabhängigen Erwartungswert normiert, um dadurch eine betriebspunktabhängige prozentuale Abweichung zu erhalten. Die erwarteten Werte können anhand der fahrzeugindividuell übertragenen 'Vehicle Identification Number' (VIN) in der fahrzeugfremden Recheneinheit 120 fahrzeugtypspezifisch hinterlegt sein.

In Schritt 222 werden die in Schritt 211 von dem Fahrzeug 110 empfangenen komponenten- bzw. katalysatorspezifischen Daten mit den in Schritt 212 empfangenen und gegebenenfalls in Schritt 221 statistisch ausgewerteten in der fahrzeugfremden Recheneinheit vorhandenen Daten verglichen. In diesem Sinne umfasst also das Plausibiltätskriterium eine nicht zu große, z.B. nicht über einem Schwellwert liegende Abweichung der komponentenspezifischen Daten vom Erwartungswert.

Wenn die Kenngröße des Fahrzeugs 110 und die Kenngrößen der anderen Fahrzeuge 150 zumindest im Wesentlichen übereinstimmen und nicht um mehr als einen vorgegebenen Wert von z.B. 5 % voneinander abweichen, wird in Schritt 223 bewertet, dass keine Manipulation des Dosiersystems des SCR-Katalysators vorliegt.

Wenn hingegen die Kenngröße des Fahrzeugs 110 und die Kenngrößen der anderen Fahrzeuge 150 um mehr als den vorgegebenen Wert von z.B. 5 % voneinander abweichen, wird in Schritt 224 bewertet, dass eine Manipulation des Dosiersystems vorliegt oder zumindest vorliegen könnte.

In letzterem Fall wird in Schritt 230 eine vorgegebene Maßnahme durchgeführt, beispielsweise kann ein Fehlerzähler erhöht werden. Wenn dieser Fehlerzähler einen Schwellwert erreicht, kann zusätzlich als vorgegebene Maßnahme eine aktive Überprüfung durchgeführt werden, ob tatsächliche eine Manipulation vorliegt. Die fahrzeugfremde Recheneinheit 120 kann das Fahrzeug 110 zu diesem Zweck anweisen, eine entsprechende aktive Überprüfung durchzuführen.

Als aktive Überprüfung des Dosiersystems können beispielsweise mit Hilfe eines theoretischen Modells eine Steifigkeit ("rigidity") des Harnstoffdosierungssystems und ein zu erwartender Druckabfall, wenn ein Ventil des Harnstoffdosierungssystems geöffnet wird, bestimmt werden. Die Steifigkeit beschreibt insbesondere den Druckabfall nach einer Reduktion der Pumpleistung bei geschlossenem Dosierventil. Daraufhin kann das Harnstoffdosierungssystem zu Testzwecken angesteuert werden, insbesondere kann das Ventil geöffnet und tatsächlich gemessene Werte können mit den theoretischen Werten des Modells verglichen werden.

Das Erkennen eines manipulierten Betriebs kann noch weiter verbessert werden, wenn eine oder mehrere vorgegebene Maßnahmen durchgeführt werden, wenn basierend auf dem Ergebnis der Plausibilitätsüberprüfung bewertet wird, dass eine Manipulation der Komponente vorliegt. Insbesondere kann mit diesen Maßnahmen dann insgesamt verifiziert werden, ob tatsächlich eine Manipulation der Komponente vorliegt.

Beispielsweise kann als eine solche Maßnahme ein Systemtest als weitere Überprüfung durchgeführt werden, ob eine Manipulation vorliegt.

Beispielsweise kann als eine solche Maßnahme auch überprüft werden, ob im Lichte der zurückgelegten Wegstrecken und/oder Betriebsdauern genügen Harnstoff nachgefüllt wurde, insbesondere ist das Verhältnis Kraftstoffverbrauch zu Harnstoffverbrauch plausibel.

Beispielsweise kann als eine solche Maßnahme auch überprüft werden, ob, wie oben dargestellt, ein häufiges Löschen eines Fehlerspeichers erfolgt.

Die Endbewertung kann sich insbesondere gewichtet aus den Einzelergebnissen zusammensetzen. Liegt die Endbewertung beispielsweise über einer Schwelle, kann auf Manipulation erkannt werden.

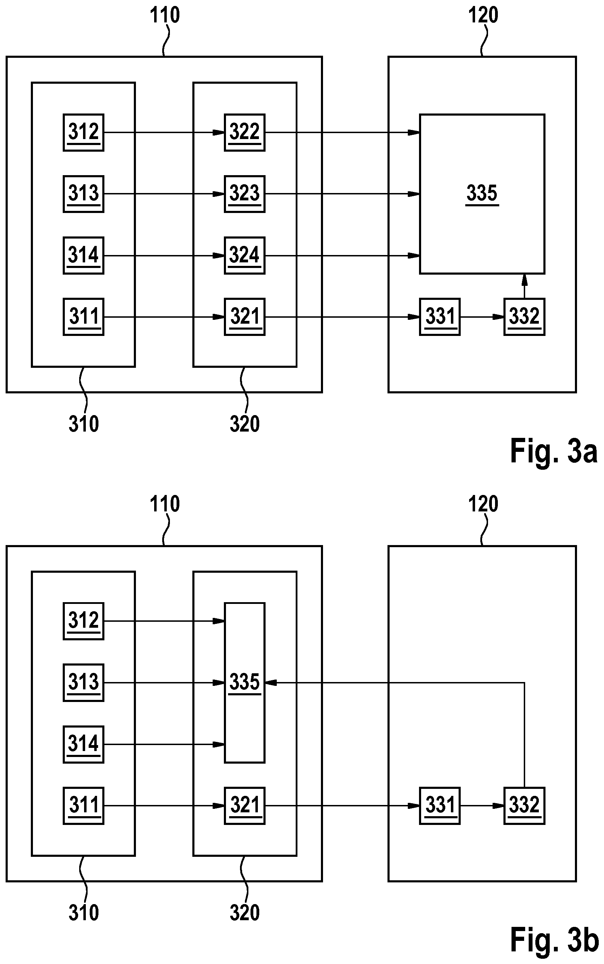

In Figur 3a ist das System aus dem Fahrzeug 110 und der fahrzeugfremden Recheneinheit 120 gemäß einer bevorzugten Ausführungsform des erfindungsgemäßen Verfahrens schematisch dargestellt.

Das Fahrzeug 110 weist dabei ein erstes Steuergerät 310 auf, beispielsweise ein Motorsteuergerät. Ferner weist das Fahrzeug 110 ein zweites Steuergerät 320 auf, welches als ein Verbindungssteuergerät für die Verbindung und Kommunikation zwischen dem Fahrzeug 110 und der fahrzeugfremden Recheneinheit 120 eingerichtet ist. Beispielsweise kann dieses Verbindungssteuergerät 320 als sog. "Connectivity Control Unit" (CCU) ausgebildet sein. Das Steuergerät 310 und das Verbindungssteuergerät 320 können über ein Kommunikationssystem des Fahrzeugs, z.B. über einen Feldbus wie CAN, insbesondere verschlüsselt miteinander kommunizieren.

Das Steuergerät 310 bestimmt insbesondere die komponentenspezifischen/katalysatorspezifischen Daten bzw. die komponentenspezifische/katalysatorspezifische Kenngröße, welche an die fahrzeugfremde Recheneinheit 120 für die Überprüfung auf Manipulation übertragen werden sollen. Ein entsprechendes Modul des Steuergeräts 310 zum Bestimmen dieser Daten ist mit 311 bezeichnet.

Über das Kommunikationssystem überträgt das Steuergerät 310 diese Daten an das Verbindungssteuergerät 320, welches diese Daten wiederum an die fahrzeugfremde Recheneinheit 120 übermittelt. Ein entsprechendes Sendemodul des Verbindungssteuergeräts 320 ist mit 321 bezeichnet.

In der fahrzeugfremden Recheneinheit 120 ist ein Empfangsmodul 331 vorgesehen, um diese Daten und gegebenenfalls weitere Daten von weiteren Fahrzeugen 150 bzw. weiteren Quellen 140 zu empfangen. Ferner ist ein Plausibilitätsmodul 332 vorgesehen, welches die Plausibilitätsüberprüfung der empfangenen Daten durchgeführt, wie oben in Bezug auf Figur 2 erläutert.

Wenn im Zuge der Plausibilitätsüberprüfung 332 bewertet wird, dass eine Manipulation des Harnstoffdosiersystems des Katalysators des Fahrzeugs 110 vorliegt oder zumindest vorliegen könnte, wird dieses Ergebnis an ein Koordinationsmodul 335 übermittelt.

Ferner können in dem Steuergerät 310 von entsprechenden Modulen 312, 313, 314 on-board in dem Fahrzeug 110 selbst noch weitere Überprüfungen auf Manipulationen durchgeführt werden. Ergebnisse dieser Überprüfungen werden von dem Steuergerät 310 an das Verbindungssteuergerät 320 übermittelt und jeweils von einem entsprechenden Sendemodul 322, 323, 324 an die fahrzeugfremde Recheneinheit 120 übermittelt, insbesondere an das Koordinationsmodul 335.

In dem Koordinationsmodul 335 wird insbesondere jedes Mal ein Zähler erhöht, wenn im Zuge einer dieser Überprüfungen 331, 312, 313, 314 bewertet wird, dass eine Manipulation des Harnstoffdosiersystems des Katalysators des Fahrzeugs 110 vorliegt oder zumindest vorliegen könnte. Wenn dieser Zähler einen Schwellwert erreicht, weist das Koordinationsmodul 335 das Fahrzeug 110, insbesondere das Steuergerät 310 an, eine aktive Überprüfung auf Manipulation durchzuführen.

Wenn beispielsweise von einem Hersteller des Fahrzeugs eine neue komponentenspezifische Kenngröße entwickelt wurde, mittels welcher eine Manipulation zuverlässig erkannt werden kann, kann das Koordinationsmodul 335 das Steuergerät 310, insbesondere das Modul 311 anweisen, in Zukunft diese komponentenspezifische Kenngröße zu bestimmen und zu übermitteln.

Es sei an dieser Stelle angemerkt, dass das Koordinationsmodul 335 zur Koordinierung der Ergebnisse verschiedener Überprüfungen auf Manipulation hin beispielsweise auch in das Verbindungssteuergerät 320 implementiert werden kann, wie es in Figur 3b dargestellt ist. In diesem Fall können die Sendemodule 322, 323, 324 entfallen. Das Ergebnis der Plausibilitätsüberprüfung 332 wird in diesem Fall von der fahrzeugfremden Recheneinheit 120 an das Koordinationsmodul 335 in dem Verbindungssteuergerät 320 übermittelt.

## Patentansprüche

1. Verfahren zum Erkennen eines manipulierten Betriebs einer Komponente eines Fahrzeugs (110),
wobei in einer fahrzeugfremden Recheneinheit (120) von dem Fahrzeug (110) stammende komponentenspezifische Daten empfangen werden (211),
wobei in der fahrzeugfremden Recheneinheit (120) eine Plausibilitätsüberprüfung (220) der komponentenspezifischen Daten des Fahrzeugs (110) unter Verwendung von in der fahrzeugfremden Recheneinheit (120) vorhandenen Daten durchgeführt wird, wobei aus den in der fahrzeugfremden Recheneinheit (120) vorhandenen Daten ein Plausibilitätskriterium abgeleitet wird (222),
wobei die in der fahrzeugfremden Recheneinheit vorhandenen Daten komponentenspezifische Daten von mehreren weiteren Fahrzeugen und von wenigstens einer eine Umgebung des Fahrzeugs (110) betreffende, fest installierte Quelle (140) sind, und wobei das Plausibilitätskriterium eine nicht über einem vorgegebenen Schwellwert liegende Abweichung zwischen den komponentenspezifischen Daten des Fahrzeugs und den komponentenspezifischen Daten der weiteren Fahrzeuge umfasst,
wobei basierend auf einem Ergebnis der Plausibilitätsüberprüfung (220) bewertet wird, ob ein manipulierter Betrieb der Komponente des Fahrzeugs (110) vorliegt, und
wobei, wenn basierend auf dem Ergebnis der Plausibilitätsüberprüfung (220) bewertet wird, dass ein manipulierter Betrieb der Komponente vorliegt (224), wenigstens eine weitere Überprüfung, ob eine Manipulation vorliegt, durchgeführt wird (230), wozu von der fahrzeugfremden Recheneinheit (120) das Fahrzeug (110) angewiesen wird, eine aktive Überprüfung der Komponente durchzuführen, wobei die Komponente ein Katalysator zur selektiven katalytischen Reduktion eines Fahrzeugs (110) oder ein Harnstoff Dosiersystem für einen derartigen Katalysator ist.

2. Verfahren nach Anspruch 1, wobei die komponentenspezifischen Daten eine bestimmte komponentenspezifische Kenngröße umfassen, die in Abhängigkeit von Sensorwerten des Fahrzeugs (110) bestimmt wird (211).

3. Verfahren nach Anspruch 2, wobei die komponentenspezifische Kenngröße in Abhängigkeit von Abgassensorwerten des Fahrzeugs (110) bestimmt wird (211).

4. Verfahren nach Anspruch 2 oder 3, wobei die komponentenspezifische Kenngröße in Abhängigkeit von Mittelwerten einer Vielzahl von Sensorwerten bestimmt wird (211).

5. Verfahren nach einem der Ansprüche 2 bis 4, wobei die komponentenspezifische Kenngröße in Abhängigkeit von aktuellen Werten einer Brennkraftmaschine des Fahrzeugs (110) bestimmt wird (211).

6. Verfahren nach einem der Ansprüche 2 bis 5, wobei die komponentenspezifische Kenngröße Mittelwerte einer Vielzahl von Sensorwerten in Abhängigkeit von aktuellen Werten der Brennkraftmaschine des Fahrzeugs (110) umfasst (211).

7. Vorrichtung bestehend aus einem Fahrzeug (110) und einer fahrzeugfremden Recheneinheit (120), die dazu eingerichtet ist, ein Verfahren nach einem der vorstehenden Ansprüche durchzuführen.

8. Computerprogramm, das eine Recheneinheit (120) dazu veranlasst, ein Verfahren nach einem der Ansprüche 1 bis 6 durchzuführen, wenn es auf der Recheneinheit nach Anspruch 7 ausgeführt wird.

9. Maschinenlesbares Speichermedium mit einem darauf gespeicherten Computerprogramm nach Anspruch 8.

## Claims

1. Method for detecting manipulated operation of a component of a vehicle (110),
wherein component-specific data originating from the vehicle (110) are received (211) in an extravehicular computing unit (120),
wherein a plausibility check (220) of the component-specific data relating to the vehicle (110) is carried out in the extravehicular computing unit (120) using data available in the extravehicular computing unit (120), wherein a plausibility criterion is derived (222) from the data available in the extravehicular computing unit (120),
wherein the data available in the extravehicular computing unit are component-specific data from a plurality of further vehicles and from at least one permanently installed source (140) concerning an environment of the vehicle (110), and wherein the plausibility criterion comprises a deviation not exceeding a predefined threshold value between the component-specific data relating to the vehicle and the component-specific data relating to the further vehicles,
wherein, on the basis of a result of the plausibility check (220), it is assessed whether there is manipulated operation of the component of the vehicle (110), and
wherein, if it is assessed on the basis of the result of the plausibility check (220) that there is (224) manipulated operation of the component, at least one further check of whether there is manipulation is carried out (230), for which purpose the vehicle (110) is instructed by the extravehicular computing unit (120) to carry out an active check of the component, wherein the component is a catalytic converter for the selective catalytic reduction of a vehicle (110) or a urea metering system for such a catalytic converter.

2. Method according to Claim 1, wherein the component-specific data comprise a certain component-specific characteristic variable which is determined (211) on the basis of sensor values of the vehicle (110).

3. Method according to Claim 2, wherein the component-specific characteristic variable is determined (211) on the basis of exhaust gas sensor values of the vehicle (110).

4. Method according to Claim 2 or 3, wherein the component-specific characteristic variable is determined (211) on the basis of mean values of a multiplicity of sensor values.

5. Method according to one of Claims 2 to 4, wherein the component-specific characteristic variable is determined (211) on the basis of current values of an internal combustion engine of the vehicle (110).

6. Method according to one of Claims 2 to 5, wherein the component-specific characteristic variable comprises (211) mean values of a multiplicity of sensor values on the basis of current values of the internal combustion engine of the vehicle (110).

7. Device consisting of a vehicle (110) and an extravehicular computing unit (120), which is designed to carry out a method according to one of the preceding claims.

8. Computer program which causes a computing unit (120) to carry out a method according to one of Claims 1 to 6 when executed on the computing unit according to Claim 7.

9. Machine-readable storage medium with a computer program according to Claim 8 stored thereon.

## Revendications

1. Procédé destiné à identifier un fonctionnement manipulé d'un composant d'un véhicule (110),
des données spécifiques au composant provenant du véhicule (110) étant reçues (211) dans une unité de calcul (120) extérieure au véhicule,
une vérification de plausibilité (220) des données spécifiques au composant du véhicule (110) étant mise en œuvre dans l'unité de calcul (120) extérieure au véhicule en utilisant des données présentes dans l'unité de calcul (120) extérieure au véhicule, un critère de plausibilité étant déduit (222) des données présentes dans l'unité de calcul (120) extérieure au véhicule,
les données présentes dans l'unité de calcul extérieure au véhicule étant des données spécifiques au composant de plusieurs autres véhicules et d'au moins une source (140) fixement installée concernant un environnement du véhicule (110), et le critère de plausibilité comprenant un écart, qui n'est pas supérieur à une valeur de seuil spécifiée, entre les données du véhicule spécifiques au composant et les données des autres véhicules spécifiques au composant,
un résultat de la vérification de plausibilité (220) permettant d'évaluer si un fonctionnement manipulé du composant du véhicule (110) est présent, et
lorsque le résultat de la vérification de plausibilité (220) permet d'évaluer qu'un fonctionnement manipulé du composant est présent (224), au moins une autre vérification pour savoir si une manipulation est présente étant mise en œuvre (230), le véhicule (110) recevant ainsi de l'unité de calcul (120) extérieure au véhicule l'ordre de mettre en œuvre une vérification active du composant, le composant étant un catalyseur destiné à la réduction catalytique sélective d'un véhicule (110) ou un système de dosage d'urée pour un catalyseur de ce type.

2. Procédé selon la revendication 1, les données spécifiques au composant comprenant une grandeur caractéristique spécifique au composant déterminée, qui est déterminée (211) en fonction de valeurs de détection du véhicule (110).

3. Procédé selon la revendication 2, la grandeur caractéristique spécifique au composant étant déterminée (211) en fonction de valeurs de détection de gaz d'échappement du véhicule (110).

4. Procédé selon la revendication 2 ou 3, la grandeur caractéristique spécifique au composant étant déterminée (211) en fonction de valeurs moyennes d'une pluralité de valeurs de détection.

5. Procédé selon l'une des revendications 2 à 4, la grandeur caractéristique spécifique au composant étant déterminée (211) en fonction de valeurs actuelles d'un moteur à combustion interne du véhicule (110).

6. Procédé selon l'une des revendications 2 à 5, la grandeur caractéristique spécifique au composant comprenant (211) des valeurs moyennes d'une pluralité de valeurs de détection en fonction de valeurs actuelles du moteur à combustion interne du véhicule (110).

7. Dispositif constitué d'un véhicule (110) et d'une unité de calcul (120) extérieure au véhicule, qui est mis au point pour mettre en œuvre un procédé selon l'une des revendications précédentes.

8. Programme informatique, qui amène une unité de calcul (120) à mettre en œuvre un procédé selon l'une des revendications 1 à 6 lorsqu'il est exécuté sur l'unité de calcul selon la revendication 7.

9. Support de stockage lisible par machine avec un programme informatique selon la revendication 8 stocké sur celui-ci.
